# EUROPÄISCHE PATENTSCHRIFT

(11) **EP 1 012 002 B1**
(45) Veröffentlichungstag und Bekanntmachung des Hinweises auf die Patenterteilung: **26.03.2003**
(21) Anmeldenummer: 98952602.5
(22) Anmeldetag: 18.09.1998
(51) Int. Cl.: B60R 5/04

(54) **ABDECKUNG FÜR EINEN FAHRZEUGLADERAUM**
COVERING ELEMENT FOR A VEHICLE LOADING COMPARTMENT
ELEMENT DE RECOUVREMENT POUR ESPACE DE CHARGEMENT DE VEHICULE

(30) Priorität: 20.09.1997 DE 19741628
(43) Veröffentlichungstag der Anmeldung: 28.06.2000
(60) Teilanmeldung: 02018052.7
(73) Patentinhaber: Volkswagen Aktiengesellschaft, 38436 Wolfsburg (DE)
(72) Erfinder: HOFMANN, Gustav, D-38114 Braunschweig (DE); ANDRONIS, Odysseus, D-38100 Braunschweig (DE); WIESNER, Uwe, D-38112 Braunschweig (DE)
(74) Vertreter: Liebl, Thomas, Dipl.-Ing.
(86) Internationale Anmeldenummer: EP9805967
(87) Internationale Veröffentlichungsnummer: WO99015361

(56) Entgegenhaltungen:
- EP-A- 0 428 467
- DE-U- 9 210 854
- US-A- 4 501 013
- PATENT ABSTRACTS OF JAPAN vol. 096, no. 002, 29. Februar 1996 & JP 07 251685 A (ALPINE ELECTRON INC), 3. Oktober 1995
- PATENT ABSTRACTS OF JAPAN vol. 096, no. 002, 29. Februar 1996 & JP 07 251684 A (ALPINE ELECTRON INC), 3. Oktober 1995

## Beschreibung

Die Erfindung betrifft eine Abdeckung für einen Fahrzeugladeraum gemäß dem Oberbegriff des Patentanspruchs 1.

Derartige Abdeckungen sind beispielsweise bekannt aus der DE-3734774-A1 (B60R 7/04). Die Abdeckung ist als Hutablage ausgeführt, die das Angebot von Ablagemöglichkeiten im Fahrzeug bei guter Zugänglichkeit ergänzt.

In der DE 3243802-A1 (B60R 7/04) ist die Abdeckung als eine Hutablage ausgeführt, die sich zwischen den Fondsitzen und der Heckscheibe eines Kraftfahrzeugs erstreckt. In die als Innenverkleidungselement ausgeführte Hutablage ist eine Ablageschale eingesetzt, die durch einen Deckel verschließbar ist. Der Deckel ist dabei materialeinheitlicher Bestandteil der Hutablagenverkleidung. Die Hutablage selbst ist als Auflageteil ausgeführt und deckt die Ablageschale nur mit einem geringen Anteil ihrer Oberfläche ab.

Die DE-4442042-A1 und EP-0556100-B1 (beide B60R 7/02) zeigen jeweils einen als Stauvorrichtung ausgeführten Behälter, der in einem Bereich im vorderen oberen Abschnitt des Kofferraums eines Fahrzeuges angebracht ist. Der nach Art einer Huboder Schwenklade ausgeführte Behälter ist bei geöffneter Kofferraumhaube zugänglich und kann zur Ablage unterschiedlichster Gegenstände genutzt werden. Die dort gezeigte Behälteranordnung schränkt die Stauraumhöhe ein, auch wenn der Nachteil durch eine Stauraumhöheneinstellung zumindest zeitweise eingeschränkt beseitigt werden kann.

Die DE 29508382-U1 (B 60 R 7/00) zeigt als Transportbehälter einen stationär unter einem Fahrzeugdach hängenden Staukasten, der nach seiner Entfernung aus der Befestigungslage als bewegliche Transportbox nutzbar und wie ein Koffer tragbar ausgebildet ist. Als bevorzugter Anwendungsbereich dieses Transportbehälters werden Reisemobile, Caravans, Campingfahrzeuge im allgemeinen, Reisebusse und auch Flugzeuge betrachtet, insgesamt also sehr großvolumige Fahrzeuge.

Die DE 3407299-A1 (B 60 R 11/02) zeigt eine Heckablage, die als Trägerteil für eine fahrzeugindividuell ausgestaltete Lautsprecherbox nutzbar ist.

Die WO 97/22495 zeigt als Abdeckung für einen Fahrzeugladeraum eine zwischen Fondsitzen und Heckklappe hin- und herbewegbare Rollokonstruktion. Das in unterschiedlichen Raststellungen arretierbare Endstück der Rolloanordnung ist als Ablageschale ausgeführt, die vom Fahrzeuginnenraum oder bei geöffneter Heckklappe auch von einer hinter dem Fahrzeug stehenden Person befüllt werden kann. Es wird damit eine zusätzliche Ablagemöglichkeit geschaffen, die bei derartigen Rollokonstruktionen an sich im Fahrzeug nicht vorhanden ist. Das nutzbare Ablagevolumen ist jedoch sehr gering.

Der Erfindung liegt die Aufgabe zugrunde, gattungsgemäße Abdeckungen unter Wahrung ihrer Vorteile zu verbessern.

Diese Aufgabe wird gelöst mit dem Abdeckung gemäß den Merkmalen des Patentanspruchs 1. Die Unteransprüche betreffen besonders zweckmäßige Weiterbildungen der Erfindung.

Die Erfindung gemäß Patentanspruch 1 sieht wenigstens einen lagever-änderbaren Transportgriff vor, der die Entnahme der Abdeckung aus dem Fahrzeug und auch das Wiedereinsetzen nach Gebrauch außerhalb des Fahrzeugs erleichtert, wobei der Transportgriff bei Bewegung aus seiner Ruhestellung in eine Gebrauchsstellung gleichzeitig den Kofferboden und den Kofferdeckel miteinander verriegelt. Im Falle der Verwendung der erfindungsgemäßen Abdeckung als Koffer wird damit sichergestellt, daß insbesondere bei einem hohen Befüllungsgrad keine versehentliche Öffnung des Koffers und damit ein Herausfallen des Kofferinhaltes eintreten kann. Der Transportgriff kann als weitgehend gestaltfestes Formteil oder auch nach Art eines Streifenbandes ausgeführt sein.

Insbesondere bei Kompaktfahrzeugen sind Abdeckungen gemäß Patentanspruch 14 von Vorteil. Durch eine zumindest teilweise Rücksetzung und/oder Schräganstellung des Kofferbodens kann gegenüber herkömmlichen Abdeckungen der Abstand zur Ladekante des Fahrzeugs vergrößert und damit dessen Beladbarkeit verbessert werden, ohne daß der Abdeckung selbst nennenswert Staumöglichkeiten genommen werden. Das in diesem Falle reduzierte Stauvolumen in der Abdeckung ist immer noch ausreichend für die Unterbringung von Kleinteilen (beispielsweise Werkzeug etc.) oder flachen Gegenständen (beispielsweise Karten etc.). Diese Variante ist vorteilhaft kombinierbar mit der Lösung gemäß Anspruch 1.

Die Erfindungsweiterbildung gemäß Anspruch 16 ist für die Nachrüstbarkeit, Handhabung und paßgenaue bzw. klapperfreie Unterbringung im Fahrzeug von besonderer Bedeutung. Der lösbare Einsatz mittels Lagerzapfen ist so ausgeführt, daß in Einbaulage der Kofferdeckel allein zwischen wenigstens einer Öffnungsstellung und einer Schließstellung betätigbar ist oder der Kofferdeckel gemeinsam mit dem Kofferboden aus der Einbaulage herausbewegbar ist. Hierdurch wird sichergestellt, daß die Zugänglichkeit des Transportbehälters sowohl bei innerhalb des Fahrzeugs angeordneter Abdeckung als auch bei aus dem Fahrzeug herausgenommener Abdeckung gewährleistet ist. Damit kann außerdem ein und dieselbe Abdeckung zum einen als vom Fahrzeug separierbarer Transportkoffer und zum anderen als durch eine von Hand oder von der Heckklappe über Zugbänder verschwenkbare Gepäckraumabdeckung genutzt werden. Mit dieser Konfiguration kann der Kofferdeckel auch als Innenverkleidungsteil und/oder Fahrzeugzubehörteil ausgeführt werden. Demgegenüber nimmt der Kofferboden die Funktion einer Laderaumschottwand. Der Kofferdeckel ist somit ein wesentliches Variationsmerkmal, durch das im wesentlichen baugleich ausgeführte Abdeckungen zum einen auf das Fahrzeuginnenraumdesign abgestimmt werden können und zum anderen kundenspezifische Wünsche nach Zubehörteilen wie Lautsprecherboxen oder dergleichen erfüllbar sind. Außerdem kann beispielsweise der Kofferboden für verschiedene Ausstattungsvarianten einer Fahrzeugbaureihe als Standardteil ausgeführt sein, weil er im normalen Fahrbetrieb des Fahrzeuges in der Regel nicht sichtbar ist.

Die erfindungsgemäße Konzeption erlaubt auch die Verwendung von ohnehin schon in Fahrzeugen befindlichen Hutablagen bzw. Gepäckablagen als Kofferdeckel. Zu diesem Zweck sind beispielsweise Kofferböden so ausgeführt, daß diese einerseits in den ursprünglich für die Heckablage eingerichteten Lageraufnahmen der Laderaumwandungen einsetzbar sind und andererseits den bereits vorhandenen Lagerungselementen der Heckablage ihrerseits Lagerelemente zur Verfügung stellen.

In vorteilhafter Weise kann die erfindungsgemäß ausgeführte Abdeckung in unterschiedlicher Weise vermarktet werden. Vorstellbar ist in einer ersten Variante der Verkauf eines Teilsystems, das im wesentlichen die zum Kofferboden und damit zur Laderaumschottwand gehörenden Funktionen umfaßt. Dieser Kofferboden ist auf die Einbaugegebenheiten einer bestimmten Fahrzeugreihe abgestimmt und kann ohne weiteres als Schublade oder Schwenkklappe in bereits vorhandene Lagerungen eingelegt werden. Der Kunde kann dann das bei ihm vorhandene Heckablagenteil mit dieser Grundausstattung verbinden. Alternativ kann vom Fahrzeughersteller oder Zubehörlieferanten auch ein Komplettsystem angeboten werden, das den Kofferboden und den Kofferdeckel gemeinsam umfaßt. Das Komplettsystem selbst kann bei gleichen Einbaumaßnahmen in unterschiedlichen Nutzversionen angeboten werden. Als Grundversion kann beispielsweise eine als Notfallkoffer ausgeführte Abdeckung bereitgestellt werden, die zumindest zur Aufnahme von Verbandskästen und Warndreiecken hergerichtet ist und gegebenenfalls darüber hinaus auch Bordwerkzeug geordnet bereithält. Ergänzend oder altemativ sind Systeme einsetzbar, die zumindest Teile der Abdeckung nach Art einer Babywickeltasche, eines Picknickkorbes, eines Campingsets, eines Hobbygerätekoffers oder ähnliches mehr ermöglichen. Insbesondere bei Fahrzeugen, die bereits für Verbandskästen und Warndreiecke eine geeignete Unterbringungsmöglichkeit bereithalten, können hier auf ausgesuchte Zielgruppen zugeschnittene Transportbehälter angeboten werden.

Von herausgehobener Bedeutung ist auch die Erfindungsweiterbildung gemäß Anspruch 22. Zur Vermeidung eines sogenannten Kabelsalates im Laderaum und/oder in der Insassenzelle sind - vorzugsweise genormte und/oder standardisierte - Anschlußmöglichkeiten für elektrischen Strom dem Kofferdeckel und/oder dem Kofferboden zugeordnet.

Als Weiterbildung der Erfindung ist gemäß Anspruch 23 eine Nutzbarkeit der Abdeckung als Ton- und/oder Bildwiedergabegerät gleichermaßen innerhalb und außerhalb des Fahrzeugs vorgesehen. Abweichend von der in der DE 3407299-A1 gezeigten Lösung ist das elektronische Gerät also nicht auf der Heckablage befestigbar, sondern ist die Heckablage selbst. Insbesondere bei einer Ausführung der Abdeckung als Campingset kann das Elektrogerät auch als ein flach bauender Heizplatten-Kleinherd ausgeführt sein.

Die Erfindung liefert positive Beiträge insbesondere für die Nutzbarkeit der Ablage auch außerhalb des Fahrzeugs, ohne das Einbußen für die Verwendung im Innenraum des Fahrzeugs hingenommen werden müssen.

Weitere Vorteile der Erfindung ergeben sich aus den Merkmalen der jeweiligen Unteransprüche.

Vorteilhafte Ausführungsbeispiele der Erfindung sind in der Zeichnung dargestellt. Es zeigt
- Figur 1:: das bevorzugte Anwendungsgebiet für die erfindungsgemäße Abdeckung,
- Figur 2:: in einer perspektivischen Darstellung ein erstes Ausführungsbeispiel,
- Figur 3:: in einer vergleichbaren Ansicht ein zweites Ausführungsbeispiel,
- Figur 4a:: eine erste Variante für eine Kombination aus Transportgriff und Transportsicherung,
- Figur 4b:: eine zweite Variante für eine Kombination aus Transportgriff und Transportsicherung,
- Figur 4c:: schematisch ein ergänzender Verschluß zur Arretierung des Kofferdeckels an dem Kofferboden,
- Figur 5:: eine als Musikgerät ausgeführte Abdeckung,
- Figur 6:: einen Kofferboden für eine als Notfallkoffer ausgebildete Abdeckung.
Gleiche Bauteile oder Bauteilabschnitte weisen in allen Figuren die gleiche - gegebenenfalls je Ausführungsbeispiel jeweils um 100 erhöhte - Bezifferung auf.

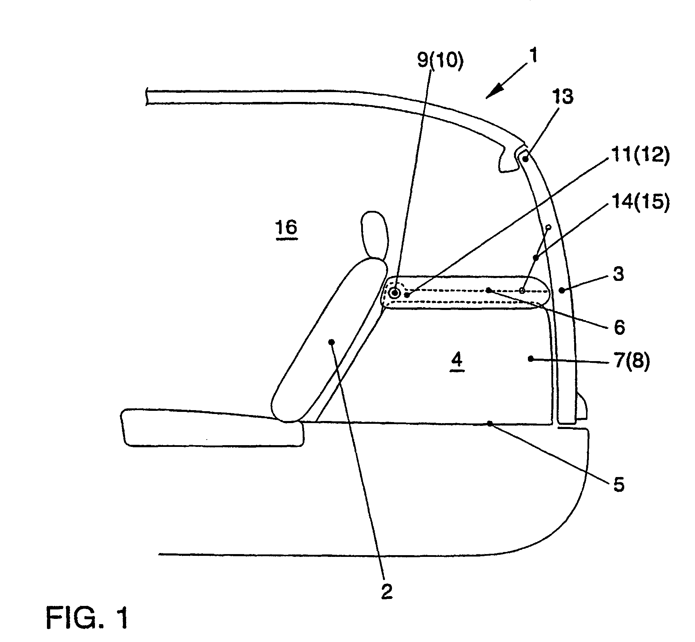

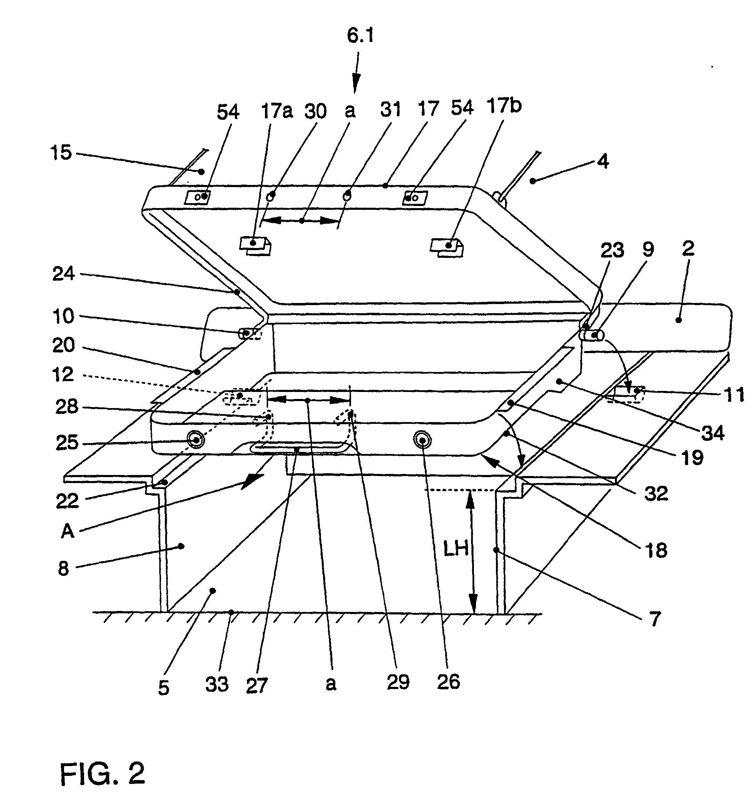

Man erkennt in Figur 1 die Heckpartie eines schematisch dargestellten und insgesamt mit 1 bezeichneten Fahrzeuges, bei dem zwischen einer Fondsitzlehne 2 und einer verschwenkbaren Heckklappe 3 ein Laderaum 4 vorgesehen ist, der nach unten durch einen Kofferrraumboden 5 und nach oben durch eine Abdeckung 6 begrenzt ist. Diese Abdeckung 6 liegt auf Seitenwandverkleidungen 7, 8 auf und ist an diesen über Lagerzapfen 9, 10 in Lageraufnahmen 11, 12 schwenkbeweglich aufgenommen. Durch Bewegung der Heckklappe 3 um ein Klappenscharnier 13 kann die Addeckung 6 insgesamt oder wenigstens ein deckelartig ausgeführtes Teil durch Zugbänder 14, 15 angehoben werden. Die Abdeckung 6 schottet eine Insassenzelle 16 des Fahrzeugs 1 von dem Laderaum 4 ab. Die Gestaltung dieser als Koffer oder Elektrogerät ausgeführten Abdeckung 6 wird im Detail anhand der Figuren 2 bis 6 näher erläutert.

Figur 2 zeigt eine insgesamt mit 6.1 bezeichnete Abdeckung, deren wesentliche Elemente hier ein Kofferdeckel 17 und ein Kofferboden 18 sind. An letzterem sind die Lagerzapfen 9, 10 integral angeformt und in die Lageraufnahmen 11, 12 einsetzbar. Weitere Tragfunktionen übernehmen randseitig abgestellte Anlageflansche 19 und 20, die auf Gegenprofilkanten 21, 22 auflegbar sind. Damit ist der Kofferboden 18 eindeutig lagefixiert und darüber hinaus auch gegenüber den Seitenteilen 7, 8 vor der Sitzbank 2 verschwenkbar. Am Kofferdeckel 17 sind Lagerringe 23, 24 vorgesehen, die drehbeweglich mit den Lagerzapfen 9, 10 verbunden sind. Die Breite der Lagerringe 23, 24 ist so bemessen, daß nach Einsatz der gesamten Abdeckung 6.1 zwischen dieser in Teile 7 und 8 der Kofferdeckel 17 unabhängig vom Kofferboden 18 schwenkbeweglich ist. Durch unterschiedliche Arretiermechanismen kann dafür gesorgt werden, daß der Kofferdeckel 17 und der Kofferboden 18 lösbar miteinander verbunden sind. Je nach Kundenwunsch kann die Arretierung dabei so ausgelegt sein, daß beispielsweise beim Anheben der Heckklappe 3 entweder nur der Kofferdeckel 17 allein oder aber der Kofferdeckel 17 mit dem Kofferboden 18 zusammen in eine Schwenkstellung übergebt.

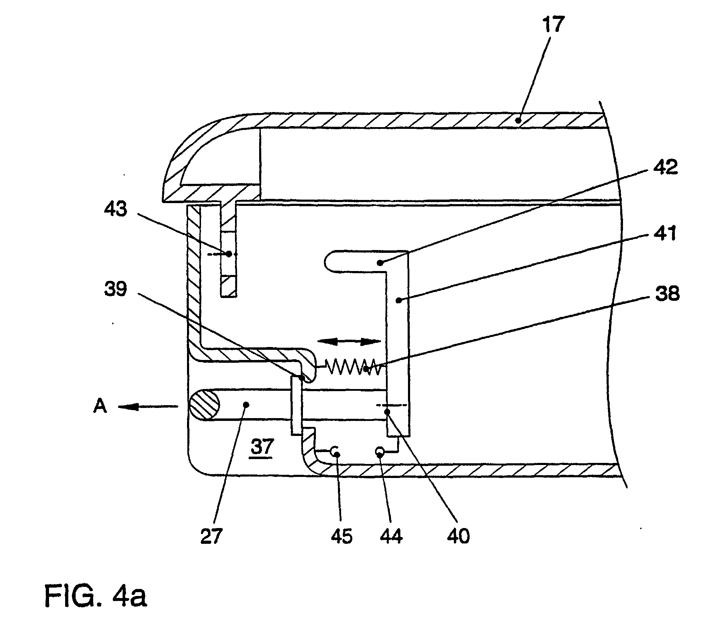

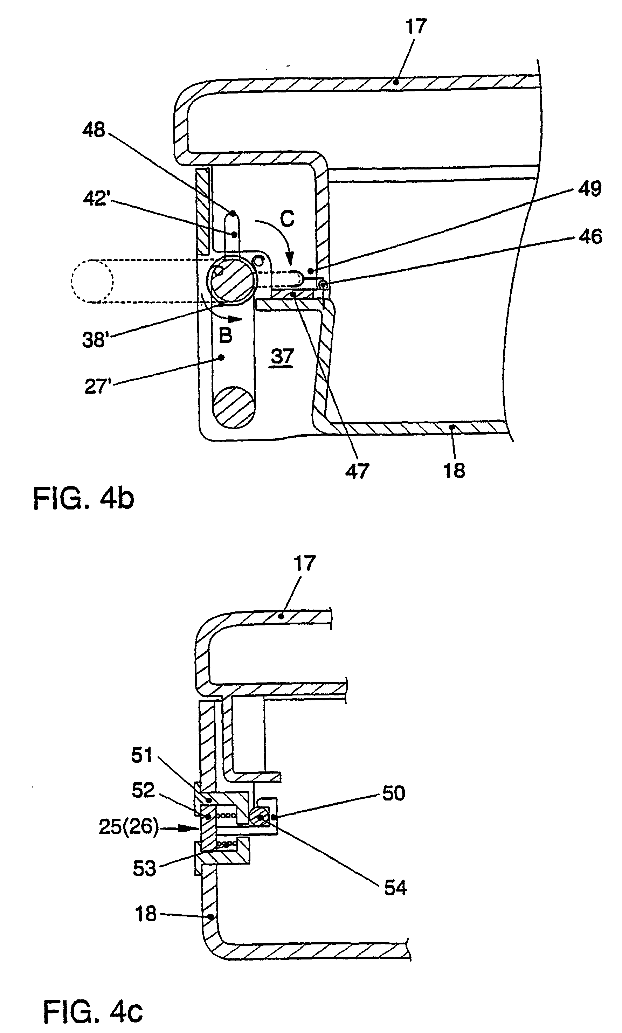

Die Arretierung von Kofferdeckel 17 und Kofferboden 18 erfolgt mittels eines Transportgriffes 27, der sich bei der in der Zeichnung dargestellten Ruhestellung innerhalb der Kontur der Abdeckung 6.1 befindet. In dieser Ruhestellung ist die Arretierung zum Kofferdeckel 17 aufgehoben. Durch Herausziehen gemäß Pfeil A können Rasthaken 28, 29 in Rastprofile 30, 31 des Kofferdeckels 17 eingreifen und verriegeln so die beiden Kofferteile 17, 18 für den Transport selbsttätig miteinander. Der Nutzer der Abdeckung 6.1 muß sich um die Verliersicherheit des darin untergebrachten Transportgutes also nicht aktiv kümmern, sondern bekommt dies durch die für den Transport ohnehin notwendige Betätigung des Transportgriffes 27 gleichsam selbsttätig bereitgestellt. Zu näheren Details dieser Verrastung wird auf die Beschreibung zu den Figuren 4a und 4b verwiesen.

Von besonderer Bedeutung bei dem in der Figur 2 dargestellten Ausführungsbeispiel ist auch eine Rücksetzung 32, durch die die Abdeckung 6.1 zur Ladekante 33 eine vergrößerte Ladehöhe LH zuläßt. Demgegenüber ist eine Vertiefung 34 mehr der Sitzlehne 2 zugeordnet. Für die Beladung von sperrigen Ladegütern (beispielsweise Getränkekisten) ist dieser Bereich weniger relevant. Gegebenenfalls kann die Rücksetzung 32 auch auf einen Teilbereich des Kofferbodens 18 beschränkt sein, der sich hinsichtlich seiner Erstreckung in Fahrzeugquerrichtung an den Abmessungen handelsüblicher getränkekisten orientiert. Oberhalb der vertiefung 34 sind hier noch Klemmschelien 17a, 17b am Kofferdeckel 17 angeformt oder befestigt, um beispielsweise einen hier nicht gezeigten Regenschirm lagefixiert unterbringen zu können.

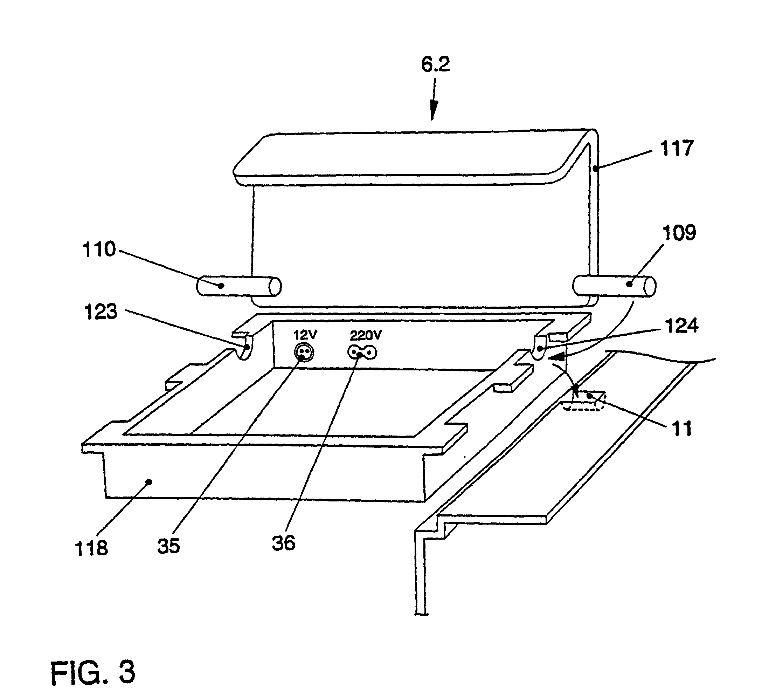

Das in Figur 3 dargestellte Ausführungsbeispiel zeigt eine als Nachrüstsatz konzipierte Abdeckung 6.2. Mit 117 ist als Kofferdeckel eine ohnehin im Fahrzeug vorhandene Gepäckablage bezeichnet, an der Lagerzapfen 109 und 110 angeformt sind. Als Kofferboden ist hier eine Ablagemulde 118 vorgesehen, die über Lagerschalen 123, 124 lösbar mit der Gepäckablage 117 gekoppelt werden kann. Der auf diese Weise erzeugte Zusammenbau kann gemeinsam in die Lageraufnahmen 11, 12 (siehe hierzu auch Figur 2) eingesetzt werden. Als wesentliches Zusatzausstattungsmerkmal und eigenständige Lösung sind der Ablagemulde 118 Stromanschlußbuchsen zugeordnet, von denen ein Niedervoltanschluß mit 35 und ein Wechselstrom-Netzanschluß mit 36 bezeichnet ist. Diese Buchsen sind über hier nicht weiter dargestellte Leitungssysteme mit dem Bordnetz des Fahrzeugs verbindbar. Insbesondere die Anschlußbuchse 36 ist interessant für solche Anwendungsfälle, bei denen die gesamte Abdeckung 6.2 aus dem Fahrzeug entfernt wird und beispielsweise auf einem Campingplatz oder innerhalb einer Garage an ein konventionelles Wechselspannungsnetz angeschlossen werden soll. Zu diesem Zweck kann in die Abdeckung 6.2 auch ein sogenanntes Netzteil bzw. ein Transformator (200 - 250V Wechselstrom / 3-24V Gleichstrom) integriert sein.

Zur näheren Erläuterung der Verriegelungsfunktion des in Figur 2 dargestellten Transportgriffes 27 ist in Figur 4a eine Schnittzeichnung dargestellt. Der dort in der Ruhestellung befindliche Transportgriff 27 befindet sich innerhalb einer bodenseitigen Mulde 37 und wird durch das Zusammenwirken einer Druckfeder 38 und eines Anschlagringes 39 in dieser Position gehalten. An den innenraumseitigen Enden 40 des Transportgriffes 27 sind Verriegelungsarme 41 befestigt, die mit einem angeformten Verriegelungshaken 42 in eine Rastausnehmung 43 hineinbewegt werden können, die ihrerseits dem Kofferdeckel 17 zugeordnet ist. Diese Verrastungsstellung wird erreicht, wenn beim Herausnehmen der gesamten Abdeckung 6.1 der Transportgriff 27 in Pfeilrichtung A gegen die Wirkung der Druckfeder 38 herausgezogen wird. Die Endposition für den Transportgriff 27 ist dann erreicht, wenn ein Clipshaken 44 am Verriegelungsarm 41 in einen Clipsknopf 45 einrastet. Die vorstehend beschriebene Clipsverbindung ist so ausgelegt, daß sie einerseits den Rückstellkräften aus der Druckfeder 38 standhalten kann, andererseits aber von Handkraft relativ leicht überdrückbar ist. Mit dieser Konstruktion ist gewährleistet, daß nach dem Abstellen der aus dem Fahrzeug 1 entnommenen Ablage der Kofferdeckel 17 sich nicht vom Kofferboden 18 lösen kann, wenn die gesamte Abdeckung zuvor hochkant abgelegt wurde. Es wird hier ausdrücklich darauf verwiesen, daß die in Figur 4a gezeigten Zusammenhänge rein schematischer Natur sind. Die konstruktive Umsetzung kann im Einzelfall höchst unterschiedlich ausgeführt sein.

Ein alternatives Verriegelungskonzept zeigt beispielsweise Figur 4b. Dort ist der Transportgriff 27' drehgelagert und wird durch eine in Richtung des Drehpfeiles B vorgespannte Drehfeder 38' in einer Ruhestellung fixiert, wie sie aus der Zeichnung ersichtlich ist. In dieser Ruhestellung folgt eine Verrastung zwischen Kofferdeckel 17 und Kofferboden 18 lediglich über eine Clipsanordnung 46, die von Hand relativ leicht gelöst werden kann. Diese Clipsanordnung 46 kann auf dem gesamten Umfang von Kofferdeckel 17 und Kofferboden 18 verteilt sein und ist so bemessen, daß beispielsweise auch bei schrägstehender Abdeckung 6.1 darin untergebrachtes Ladegut keine ungewolite Öffnung herbeiführen kann. Um aber bei einem Gebrauch der Abdeckung 6.1 als tragbaren Koffer eine eindeutige Verriegelung sicherstellen zu können, ist hier an dem Transportgriff 27' ein Verriegelungshebel 42' angeformt, der bei einer gegen die Rückstellkraft der Drehfeder 38' erfolgenden Verschwenkung gemäß Pfeilrichtung C auf einer an dem Kofferdeckel 17 angeformten Haltenasen 47 zur Anlage gebracht wird. Die Geometrie eines Hebelendes 48 ist so ausgeführt, daß für die mit Strichlinien angedeutete Verrastungsposition in einer Rastmulde 49 ebenfalls eine von Handkraft leicht überdrückbare Verrastung sichergestellt ist, die aber der von der Drehfeder 38' ausgeübten Rückstellkraft standhält.

Ergänzend zu den vorstehend beschriebenen Transportgriffarretierungen können auch Schloßverriegelungen vorgesehen werden, wie sie bereits in der Figur 2 mit den Ziffern 25 und 26 grob angedeutet worden sind. Vorstellbar ist beispielsweise eine Arretierung (siehe Figur 4c) mittels eines Verriegelungshebels 50, der mit einem in einer Aufnahmehülse 51 geführten Druckknopf 52 gegen die Wirkung einer Druckfeder 53 betätigbar ist. Der Verriegelungshebel 50 umgreift einen Verriegelungshaken 54, der seinerseits am Kofferdeckel 17 gelagert ist. Auch diese Zeichnung ist rein schematischer Natur. Es können hier konventionelle Schloßkonstruktionen eingesetzt werden, wie sie beispielsweise von Reisekoffern, Aktenkoffern oder Werkzeugkoffern bekannt sind.

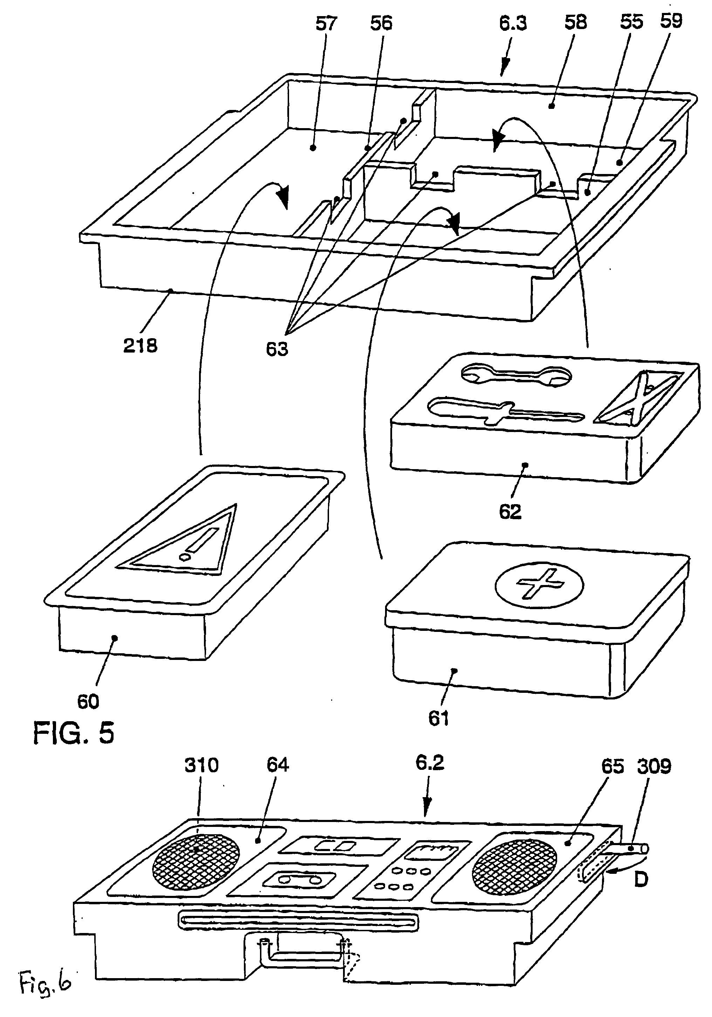

Figur 5 zeigt als bevorzugtes Ausführungsbeispiel für eine Abdeckung 6.3 als Kofferboden eine Modulkiste 218, die durch hier eingeformte Trennwände 55, 56 in standardisierte Aufnahmefächer 57 bis 59 unterteilt ist. An die Konturen diese Aufnahmefächer angepaßt sind als Bordausrüstungsgegenstände beispielsweise eine Aufnahmebox 60 für ein Warndreieck, ein Verbandskasten 61 sowie ein Bordwerkzeugsatz 62. Greifaussparungen 63 in den Trennwänden 55 und 56 ermöglichen eine vereinfachte Ablage und Entnahme der vorstehend beschriebenen Ausrüstungsgegenstände. Die Modulkiste 218 muß aber nicht zwangsläufig nur als Notfallkoffer konzipiert sein, sondern kann auch für andere Anwendungen genutzt werden. Vorstellbar sind Einsatzteile nach Art von Flüssigkeitsbehältern oder Sortierkästen für unterschiedlichste Anwendungsfälle. Als typische Transportgüter in Betracht gezogen werden können unterschiedlichste Sportgeräte, Getränkebehältnisse, Taschen- bzw. Bordlampen, Hygieneartikel (insbesondere für Kleinkinder), Wickeltücher, Kinderspielzeug, Schreibwaren, Zeitschriften oder dergleichen mehr.

Gemäß einer besonders vorteilhaften Weiterbildung der Erfindung kann eine solche Modulkiste 218 auch als Standardbefestigung für Audiogeräte hergerichtet sein. Zu diesem Zweck ist die Modulkiste 218 mit Stromanschlüssen (siehe Figur 2, Positionen 35 und 36) herzurichten. Gegebenenfalls sind ergänzend auch Anschlüsse für Kopfhörer oder Lautsprecherbuchsen vorzusehen. In eine solche Modulkiste 218 könnten dann beispielsweise tragbare Cassettenrecorder oder Radios abgelegt werden, die während der Fahrt von Fondinsassen benutzbar sind.

Bei einer anderen Erfindungsweiterbildung ist - wie in Figur 6 dargestellt - ein Gerät der Unterhaltungselektronik selbst die Heckablage. Dessen Außenkontur ist fahrzeugindividueli so gestaltet, daß es zur Stauraumabdeckung zwischen die Seitenteile 7 und 8 eingepaßt werden kann. Eine eindeutige Lagefixierung können beispielsweise Lagerzapfen 309 und 310 sicherstellen, die in die Lageraufnahmen 11, 12 einsteckbar sind. Nach Entfernung aus dem Fahrzeug 1 sind die Lagerzapfen 309, 310 gemäß Pfeilrichtung in die Kontur der Abdeckung 6.4 hineinverlegbar. Das in Figur 6 gezeigte Ausführungsbeispiel ist ein tragbares Kombi-Musikgerät, das beispielsweise einen CD-Player, ein Cassetten-Deck und ein Radioteil umfaßt. Lautsprecherboxen 64, 65 sind entweder in das Gerätegehäuse integriert oder können als separate Bauteile mit diesem nur lose verbunden sein, um dann für einen Betrieb außerhalb des Fahrzeugs gegebenenfalls auch vom eigentlichen Kemgerät entfernt aufgestellt werden zu können. Auch für die Abdeckung 6.4 wird ein Modulkonzept dergestalt vorgeschlagen, daß standardisierte Lautsprecher- und Musikwiedergabegeräte in fahrzeugindividuell gestaltete Grundträger eingepaßt werden.

Die Erfindung ist nicht auf die in der Zeichnung dargestellten Ausführungsbeispiele beschränkt. Die unterschiedlichen Konzepte sollen hier lediglich andeuten, mit welch hoher Variabilität die Erfindung an Fahrzeugen unterschiedlichster Art verwendet werden kann.

## Patentansprüche

1. Als kofferartiger Hohlkörper ausgeführte Abdeckung (6.1-6.4) für einen Fahrzeugladeraum (4) mit wenigstens einem Transportbehälter, der integraler Bestandteil des Hohlkörpers ist und zur Aufnahme von Ladegut zwischen wenigstens einem Kofferdeckel (17) und einem Kofferboden (18) hergerichtet ist,
**dadurch gekennzeichnet, dass**
an dem wenigstens einen Kofferdeckel (17) und/oder an dem Kofferboden (18) wenigstens ein lageveränderbarer Transportgriff (27, 27') vorgesehen ist, und dass der Griff derart ausgelegt ist, dass durch Bewegung des Transportgriffs (27, 27') der Kofferdeckel (17) gegen den Kofferboden (18) verriegelbar ist.

2. Abdeckung nach Anspruch 1,
**dadurch gekennzeichnet, dass**
der wenigstens eine Transportgriff (27, 27') durch wenigstens ein Federelement (38, 38') in einer Ruhestellung gehalten ist und gegen die Rückstellkraft des Federelements (38, 38') in eine Gebrauchsstellung verstellbar ist, durch die eine Handhabung der Abdeckung (6.1-6.4) nach Art eines Transportkoffers gewährleistet ist.

3. Abdeckung nach Anspruch 1 oder 2,
**dadurch gekennzeichnet, dass**
in der Ruhestellung der Kofferdeckel (17) gegenüber dem Kofferboden (18) verschwenkbar ist und dass durch Bewegung des Transportgriffs (27, 27') in die Gebrauchsstellung der Kofferdeckel (17) gegen den Kofferboden (18) verriegelt ist.

4. Abdeckung nach wenigstens einem der Ansprüche 1 bis 3,
**dadurch gekennzeichnet, dass**
der Transportgriff (27, 27') in der Gebrauchsstellung in einer Rastierung (44 und 45; 48 und 49) arretiert ist, die der Rückstellkraft des wenigstens einen Federelementes (38, 38') standhält, aber durch Handkraft überdrückbar ist.

5. Abdeckung nach wenigstens einem der Ansprüche 1 bis 4,
**dadurch gekennzeichnet, dass**
der Kofferdeckel (17) oder der Kofferboden (18) wenigstens ein Ablagefach aufweisen oder durch den Kofferdeckel (17) und den Kofferboden (18) gemeinsam ein Ablagefach gebildet ist.

6. Abdeckung nach Anspruch 5,
**dadurch gekennzeichnet, dass**
das Ablagefach zur Aufnahme eines Warndreieckes oder eines Verbandskastens oder eines Bordwerkzeuges oder eines Bordwerkzeugbehältnisses oder eines Reservekanisters oder eines Regenschirmes oder eines Sportgerätes oder eines Getränkebehältnisses oder eines Schreibwarenbehältnisses oder eines Sortierkastens oder einer Taschen- bzw. Bordlampe oder eines Audiogerätes oder von Hygieneartikeln, insbesondere für Kleinkinder, oder eines Wickelsets oder eines Kinderspielzeuges oder wenigstens einer Batterie oder wenigstens eines Akkumulators oder eines Netzteils/Transformators hergerichtet ist.

7. Abdeckung nach wenigstens einem der Ansprüche 1 bis 6,
**dadurch gekennzeichnet, dass**
der Kofferdeckel (17) als Oberseite der Abdeckung (6.1 - 6.3) nach Art eines Innenverkleidungsund/oder Innenausstattungsteils gebildet ist.

8. Abdeckung nach wenigstens einem der Ansprüche 1 bis 7,
**dadurch gekennzeichnet, dass**
der Kofferboden (18) als Unterseite nach Art einer Laderaumschottwand ausgebildet ist.

9. Abdeckung nach wenigstens einem der Ansprüche 1 bis 8,
**dadurch gekennzeichnet, dass**
sie nach Art einer Heckablage bzw. Hutablage gebildet ist.

10. Abdeckung nach wenigstens einem der Ansprüche 1 bis 9,
**dadurch gekennzeichnet, dass**
der Kofferdeckel (17) durch eine im Fahrzeug ohnehin vorhandene Heckablage (117) gebildet ist, die zusammen mit einem daran angepassten Kofferboden (118) zur gemeinsamen Unterbringung im Fahrzeug (1) hergerichtet ist.

11. Abdeckung nach wenigstens einem der Ansprüche 1 bis 10,
**dadurch gekennzeichnet, dass**
der lösbare Einsatz des Kofferdeckels (17) und/oder des Kofferbodens (18) ergänzend durch ein Kantenprofil gewährleistet ist.

12. Abdeckung nach wenigstens einem der Ansprüche 1 bis 11,
**dadurch gekennzeichnet, dass**
der Kofferdeckel (17) mittels wenigstens einer Schlossanordnung (25,26) gegenüber dem Kofferboden (18) arretierbar ist.

13. Abdeckung nach wenigstens einem der Ansprüche 1 bis 12,
**dadurch gekennzeichnet, dass**
der Kofferboden (18) als Standardbauteil ausgeführt ist, in das wenigstens ein Ablagefach oder ein Satz von Ablagefächern einsetzbar ist, das bzw. der mit wenigstens einer an das Standardbauteil angepassten Normanschlusskonfiguration ausgeführt ist.

14. Abdeckung nach einem der Ansprüche 1 bis 13,
**dadurch gekennzeichnet, dass**
der Kofferboden (18) im Bodenbereich eine die Unterbringung größeren Ladegutes im Fahrzeugladeraum (4) ermöglichende Rücksetzung (32) aufweist.

15. Abdeckung nach Anspruch 14,
**dadurch gekennzeichnet, dass**
die Rücksetzung (32) hinsichtlich ihrer Ausdehnung in Fahrzeugquerrichtung auf handelsübliche Getränkekästen abgestimmt ist.

16. Abdeckung nach einem der Ansprüche 1 bis 15,
**dadurch gekennzeichnet, dass**
ein lösbarer Einsatz in das Fahrzeug (1) durch Lagerzapfen (9, 10) gewährleistet ist.

17. Abdeckung nach Anspruch 16,
**dadurch gekennzeichnet, dass**
sie mittels der Lagerzapfen (109, 110 oder 309, 310) zwischen einer Lagerstellung und einer Ruhestellung verstellbar ist.

18. Abdeckung nach Anspruch 16 oder 17,
**dadurch gekennzeichnet, dass**
die Lagerzapfen zur Lagerung am Fahrzeug einerseits und zur Lagerung zwischen Kofferdeckel (17) und Kofferboden (18) andererseits hergerichtet sind.

19. Abdeckung nach Anspruch 16,
**dadurch gekennzeichnet, dass**
an dem Kofferdeckel (17) und/oder an dem Kofferboden (18) Haltemittel vorgesehen sind, die zur Verbindung mit an einer Fahrzeugklappe (3) befestigten oder befestigbaren Zugmitteln (14, 15) hergerichtet sind.

20. Abdeckung nach Anspruch 16, **dadurch gekennzeichnet, dass**
der Kofferdeckel (17) in unterschiedlichen Schwenkstellungen gegenüber dem Kofferboden (18) arretierbar ist.

21. Abdeckung nach wenigstens einem der Ansprüche 16 bis 20,
**dadurch gekennzeichnet, dass**
in Einbaulage wahlweise der Kofferdeckel (17) allein in Öffnungs- oder Schließstellung bewegbar ist oder der Kofferdeckel (17) gemeinsam mit dem Kofferboden (18) aus der Einbaulage heraus bewegbar ist.

22. Abdeckung einem Ansprüche 1 bis 16, **dadurch gekennzeichnet, dass**
der Kofferdeckel (17) und/oder der Kofferboden (18) wenigstens einen Anschluss für elektrischen Strom aufweist.

23. Abdeckung nach einem der Ansprüche 1 bis 22, **dadurch gekennzeichnet, dass**
durch den Hohlkörper das Gehäuse für ein Elektrogerät zumindest abschnittsweise gebildet ist.

24. Abdeckung nach Anspruch 22 oder 23, **dadurch gekennzeichnet, dass**
der Anschluss als Niedervolt-Steckbuchse ausgeführt ist.

25. Abdeckung nach Anspruch 22 oder 23, **dadurch gekennzeichnet, dass**
der Anschluss als 200-250 Volt-Wechselstromanschluss ausgeführt ist.

26. Abdeckung nach wenigstens einem der Ansprüche 22 bis 25,
**dadurch gekennzeichnet, dass**
das Elektrogerät als tragbares Ton- und/oder Bildwiedergabegerät ausgebildet ist.

27. Abdeckung nach wenigstens einem der Ansprüche 22 bis 26,
**dadurch gekennzeichnet, dass**
das Ton- und/oder Bildwiedergabegerät zwischen zwei Lautsprecherboxen angeordnet ist.

28. Abdeckung nach wenigstens einem der Ansprüche 22 bis 27,
**dadurch gekennzeichnet, dass**
eine Anordnung aus Lautsprecherboxen und Ablagefach in der Weise vorgesehen ist, dass die Lautsprecherboxen zwischen sich das wenigstens eine Ablagefach einschließen.

## Claims

1. Cover (6.1-6.4), designed as a suitcase-like hollow body, for a motor vehicle luggage compartment (4), comprising at least one transport container which is an integral part of the hollow body and is designed to receive luggage between at least one suitcase lid (17) and a suitcase bottom (18), **characterized in that** at least one carrying handle (27, 27'), the position of which can be varied, is provided on the at least one suitcase lid (17) and/or on the suitcase bottom (18) and **in that** the handle is so configured that, by moving the carrying handle (27, 27'), the suitcase lid (17) can be locked relative to the suitcase bottom (18).

2. Cover according to Claim 1, **characterized in that** the at least one carrying handle (27, 27') is retained in a position of rest by at least one spring element (38, 38') and is adjustable, against the restoring force of the spring element (38, 38'), into a position of use which makes it possible for the cover (6.1-6.4) to be handled in the manner of a suitcase.

3. Cover according to Claim 1 or 2, **characterized in that**, in the position of rest, the suitcase lid (17) can be pivoted relative to the suitcase bottom (18) and **in that**, by moving the carrying handle (27, 27') into the position of use, the suitcase lid (17) is locked relative to the suitcase bottom (18).

4. Cover according to at least one of Claims 1 to 3, **characterized in that** the carrying handle (27, 27') is locked in the position of use in a latching device (44 and 45; 48 and 49) which resists the restoring force of the at least one spring element (38, 38') but can be forced over manually.

5. Cover according to at least one of Claims 1 to 4, **characterized in that** the suitcase lid (17) or the suitcase bottom (18) possesses at least one storage compartment or a storage compartment is formed jointly by the suitcase lid (17) and the suitcase bottom (18).

6. Cover according to Claim 5, **characterized in that** the storage compartment is designed to receive a warning triangle or a first-aid chest or a tool kit or a tool kit container or a reserve petrol can or an umbrella or sporting equipment or a drinks container or a stationery container or a sorting box or a pocket torch or flashlight or an audio appliance or sanitary articles, especially for small children, or a changing kit for babies or a child's toy or at least one battery or at least one accumulator or a power pack/transformer.

7. Cover according to at least one of Claims 1 to 6, **characterized in that** the suitcase lid (17) is formed as the top of the cover (6.1-6.3) in the manner of an internal lining and/or internal trim part.

8. Cover according to at least one of Claims 1 to 7, **characterized in that** the suitcase bottom (18) is formed as an underside in the manner of a luggage space partition.

9. Cover according to at least one of Claims 1 to 8, **characterized in that** it is formed in the manner of a rear shelf or parcel shelf.

10. Cover according to at least one of Claims 1 to 9, **characterized in that** the suitcase lid (17) is formed by a rear shelf (117) which is in any case present in the vehicle and is designed to be jointly accommodated in the vehicle (1) together with a suitcase bottom (118) adapted thereto.

11. Cover according to at least one of Claims 1 to 10, **characterized in that** the detachable use of the suitcase lid (17) and/or of the suitcase bottom (18) is additionally ensured by an edge section.

12. Cover according to at least one of Claims 1 to 11, **characterized in that** the suitcase lid (17) can be locked relative to the suitcase bottom (18) by means of at least one lock arrangement (25, 26).

13. Cover according to at least one of Claims 1 to 12, **characterized in that** the suitcase bottom (18) is configured as a standard component into which at least one storage compartment or a set of storage compartments can be introduced, this storage compartment or set of storage compartments being formed with at least one standard connection configuration adapted to the standard component.

14. Cover according to one of Claims 1 to 13, **characterized in that** the suitcase bottom (18) comprises, in the bottom region, a recessed portion (32) permitting relatively large luggage to be accommodated in the vehicle luggage compartment (4).

15. Cover according to Claim 14, **characterized in that** the recess portion (32) is designed, in terms of its extent in the transverse direction of the vehicle, to match commercially available beverage crates.

16. Cover according to one of Claims 1 to 15, **characterized in that** detachable use in the vehicle (1) is ensured by bearing pins (9, 10).

17. Cover according to Claim 16, **characterized in that** it can be adjusted by means of the bearing pins (109, 110 or 309, 310) between a bearing position and a position of rest.

18. Cover according to Claim 16 or 17, **characterized in that** the bearing pins are designed to be mounted on the vehicle on one end and to be mounted between the suitcase lid (17) and suitcase bottom (18) at the other end.

19. Cover according to Claim 16, **characterized in that** retaining means are provided on the suitcase lid (17) and/or on the suitcase bottom (18) and are designed to be connected to tensioning means (14, 15) which are or can be fixed to a vehicle tail gate (3).

20. Cover according to Claim 16, **characterized in that** the suitcase lid (17) can be locked in various pivoting positions relative to the suitcase bottom (18).

21. Cover according to at least one of Claims 16 to 20, **characterized in that**, in the installed position, either the suitcase lid (17) alone can be moved into an open or closed position or the suitcase lid (17) can be moved out of the installed position jointly with the suitcase bottom (18).

22. Cover according to one of Claims 1 to 16, **characterized in that** the suitcase lid (17) and/or the suitcase bottom (18) comprises at least one connection for electrical current.

23. Cover according to one of Claims 1 to 22, **characterized in that** the hollow body forms at least part of the housing for an electrical appliance.

24. Cover according to Claim 22 or 23, **characterized in that** the connection is configured as a low-voltage socket.

25. Cover according to Claim 22 or 23, **characterized in that** the connection is configured as a 200-250 volt alternating current connection.

26. Cover according to at least one of Claims 22 to 25, **characterized in that** the electrical appliance is in the form of a portable sound and/or vision playback appliance.

27. Cover according to at least one of Claims 22 to 26, **characterized in that** the sound and/or vision playback appliance is disposed between two loudspeaker boxes.

28. Cover according to at least one of Claims 22 to 27, **characterized in that** an arrangement of loudspeaker boxes and storage compartment is provided, in a manner such that the loudspeaker boxes enclose the at least one storage compartment between them.

## Revendications

1. Elément de recouvrement (6.1-6.4) réalisé sous forme de corps creux de type valise pour un espace de chargement (4) d'un véhicule, comprenant au moins un récipient de transport qui fait partie intégrante du corps creux et qui est aménagé pour recevoir un produit à charger entre au moins un couvercle de valise (17) et un fond de valise (18),
**caractérisé en ce que**
au moins une poignée de transport (27, 27') de position modifiable est prévue sur l'au moins un couvercle de valise (17) et/ou sur le fond de valise (18), et **en ce que** la poignée est conçue de telle sorte que le mouvement de la poignée de transport (27, 27') permette de verrouiller le couvercle de valise (17) contre le fond de valise (18).

2. Elément de recouvrement selon la revendication 1,
**caractérisé en ce que**
l'au moins une poignée de transport (27, 27') est maintenue dans une position de repos par au moins un élément à ressort (38, 38') et peut être déplacée à l'encontre de la force de rappel de l'élément à ressort (38, 38') dans une position d'utilisation, qui garantit une manipulation de l'élément de recouvrement (6.1-6.4) à la manière d'une valise de transport.

3. Elément de recouvrement selon la revendication 1 ou 2,
**caractérisé en ce que**
dans la position de repos, le couvercle de valise (17) peut être pivoté par rapport au fond de valise (18) et **en ce que** le mouvement de la poignée de transport (27, 27') dans la position d'utilisation verrouille le couvercle de valise (17) contre le fond de valise (18).

4. Elément de recouvrement selon au moins l'une des revendications 1 à 3,
**caractérisé en ce que**
la poignée de transport (27, 27') est bloquée dans la position d'utilisation dans un élément d'encliquetage (44 et 45 ; 48 et 49) qui résiste à la force de rappel de l'au moins un élément à ressort (38, 38') mais qui peut être surmonté par la force manuelle.

5. Elément de recouvrement selon au moins l'une des revendications 1 à 4,
**caractérisé en ce que**
le couvercle de valise (17) ou le fond de valise (18) présentent au moins un compartiment de rangement, ou bien un compartiment de rangement est formé conjointement par le couvercle de valise (17) et le fond de valise (18).

6. Elément de recouvrement selon la revendication 5,
**caractérisé en ce que**
le compartiment de rangement est prévu pour recevoir un triangle de signalisation ou une trousse de secours ou un outil de bord ou une boîte à outils de bord ou un réservoir d'essence de secours ou un parapluie ou un équipement sportif ou un réservoir de boissons ou un nécessaire d'écriture ou une boîte de rangement ou une lampe de poche ou de bord ou un appareil audio ou des articles d'hygiène, en particulier pour des jeunes enfants, ou un nécessaire à langer ou un jouet d'enfant ou au moins une batterie ou au moins un accumulateur ou un bloc d'alimentation/transformateur.

7. Elément de recouvrement selon au moins l'une des revendications 1 à 6,
**caractérisé en ce que**
le couvercle de valise (17) est formé en tant que partie supérieure de l'élément de recouvrement (6.1-6.3) à la façon d'un habillage interne et/ou d'une pièce d'équipement interne.

8. Elément de recouvrement selon au moins l'une des revendications 1 à 7,
**caractérisé en ce que**
le fond de valise (18) est réalisé en tant que partie inférieure à la façon d'une paroi de cloison isolante de l'espace de chargement.

9. Elément de recouvrement selon au moins l'une des revendications 1 à 8,
**caractérisé en ce qu'**
il est formé à la façon d'une tablette arrière ou d'une plage arrière.

10. Elément de recouvrement selon au moins l'une des revendications 1 à 9,
**caractérisé en ce que**
le couvercle de valise (17) est formé par une tablette arrière (117) existant déjà dans le véhicule, qui est prévue, conjointement avec un fond de valise (118) adapté à celle-ci, pour être montée conjointement dans le véhicule (1).

11. Elément de recouvrement selon au moins l'une des revendications 1 à 10,
**caractérisé en ce que'**
l'insertion réversible du couvercle de valise (17) et/ou du fond de valise (18) est garantie en complément par un profil d'arête.

12. Elément de recouvrement selon au moins l'une des revendications 1 à 11,
**caractérisé en ce que**
le couvercle de valise (17) peut être bloqué au moyen d'au moins un agencement de serrure (25, 26) par rapport au fond de valise (18).

13. Elément de recouvrement selon au moins l'une des revendications 1 à 12,
**caractérisé en ce que**
le fond de valise (18) est réalisé en tant que composant standard dans lequel au moins un compartiment de rangement ou un jeu de compartiments de rangement peut être inséré, lequel est réalisé avec au moins une configuration de raccordement normalisée adaptée au composant. standard.

14. Elément de recouvrement selon l'une quelconque des revendications 1 à 13,
**caractérisé en ce que**
le fond de valise (18) présente, dans la région du fond, un retrait (32) permettant de placer des produits à charger relativement gros dans l'espace de chargement (4) du véhicule.

15. Elément de recouvrement selon la revendication 14,
**caractérisé en ce que**
le retrait (32) est adapté, en ce qui concerne son étendue dans la direction transversale du véhicule, à des caisses de boisson usuelles dans le commerce.

16. Elément de recouvrement selon l'une quelconque des revendications 1 à 15,
**caractérisé en ce qu'**
une insertion réversible dans le véhicule (1) est assurée par des tourillons (9, 10).

17. Elément de recouvrement selon la revendication 16,
**caractérisé en ce qu'**
il peut être déplacé au moyen des tourillons (109, 110 ou 309, 310) entre une position de stockage et une position de repos.

18. Elément de recouvrement selon la revendication 16 ou 17,
**caractérisé en ce que**
les tourillons sont destinés pour le montage sur le véhicule d'une part et pour le montage entre le couvercle de valise (17) et le fond de valise (18) d'autre part.

19. Elément de recouvrement selon la revendication 16,
**caractérisé en ce que**
des moyens de retenue sont prévus sur le couvercle de valise (17) et/ou sur le fond de valise (18), lesquels sont destinés à la connexion à des moyens de traction (14, 15) fixés ou pouvant être fixés sur un hayon de véhicule (3).

20. Elément de recouvrement selon la revendication 16,
**caractérisé en ce que**
le couvercle de valise (17) peut être bloqué dans diverses positions de pivotement par rapport au fond de valise (18).

21. Elément de recouvrement selon au moins l'une des revendications 16 à 20,
**caractérisé en ce que**
dans la position de montage, le couvercle de valise (17) seul peut être déplacé dans la position d'ouverture ou de fermeture, ou bien le couvercle de valise (17) conjointement avec le fond de valise (18) peut être déplacé hors de la position de montage.

22. Elément de recouvrement selon l'une quelconque des revendications 1 à 16,
**caractérisé en ce que**
le couvercle de valise (17) et/ou le fond de valise (18) présente(nt) au moins un raccordement pour le courant électrique.

23. Elément de recouvrement selon l'une quelconque des revendications 1 à 22,
**caractérisé en ce que**
le boîtier est formé par le corps creux au moins par sections pour un appareil électrique.

24. Elément de recouvrement selon la revendication 22 ou 23,
**caractérisé en ce que**
le raccordement est réalisé en tant que prise de courant basse tension.

25. Elément de recouvrement selon la revendication 22 ou 23,
**caractérisé en ce que**
le raccordement est réalisé en tant que raccordement pour courant alternatif 200-250 volts.

26. Elément de recouvrement selon au moins l'une des revendications 22 à 25,
**caractérisé en ce que**
l'appareil électrique est réalisé sous forme d'appareil portable de restitution du son et/ou de l'image.

27. Elément de recouvrement selon au moins l'une des revendications 22 à 26,
**caractérisé en ce que**
l'appareil de restitution du son et/ou de l'image est disposé entre deux enceintes de hauts-parleurs.

28. Elément de recouvrement selon au moins l'une des revendications 22 à 27,
**caractérisé en ce qu'**
il est prévu un agencement d'enceintes de hauts-parleurs et de compartiments de rangement de telle manière que les enceintes de hauts-parleurs s'incluent entre l'au moins un compartiment de rangement.
